# EUROPÄISCHE PATENTSCHRIFT

(11) **EP 1 235 679 B1**
(45) Veröffentlichungstag und Bekanntmachung des Hinweises auf die Patenterteilung: **04.06.2003**
(21) Anmeldenummer: 00981248.8
(22) Anmeldetag: 11.11.2000
(51) Int. Cl.: B29C 51/12, B60R 13/02, B32B 7/04

(54) **VERFAHREN ZUR HERSTELLUNG VON INNENAUSSTATTUNGSKOMPONENTEN VON KRAFTFAHRZEUGEN UND PRODUKT**
METHOD FOR PRODUCING COMPONENTS OF INTERIOR FITTINGS IN MOTOR VEHICLES AND CORRESPONDING ARTICLE
PROCEDE DE FABRICATION DE COMPOSANTS D'EQUIPEMENT INTERIEUR DE VEHICULES MOTORISES ET PRODUIT CORRESPONDANT

(30) Priorität: 10.12.1999 DE 19959654
(43) Veröffentlichungstag der Anmeldung: 04.09.2002
(73) Patentinhaber: Findlay Industries Deutschland GmbH, 82538 Geretsried (DE)
(72) Erfinder: LÖRINCZ, Matthias, 64380 Rossdorf (DE); KLEINT, Oliver, 82538 Geretsried (DE)
(74) Vertreter: Jönsson, Hans-Peter, Dr.Dipl.-Chem.
(86) Internationale Anmeldenummer: EP0011172
(87) Internationale Veröffentlichungsnummer: WO01041999

(56) Entgegenhaltungen:
- EP-A- 0 299 168
- EP-A- 0 596 379
- EP-A- 0 872 383
- DE-A- 4 444 880
- DE-C- 862 218

## Beschreibung

Gegenstand der Erfindung ist ein Verfahren zur Herstellung von Innenausstattungskomponenten von Kraftfahrzeugen mit einem definierten Oberflächenprofil nach Anspruch 1 sowie ein Produkt nach Anspruch 5.

Die WO 90/03256 betrifft ein Verfahren und eine Vorrichtung zur Herstellung von steifen Gegenständen mit hohem Oberflächen-Finish, insbesondere Kunststoff-Formkörper. In einem ersten Schritt wird ein thermoplastisches faserverstärktes Substrat und eine die Oberfläche bildende Folie oder ein Film separat vorgeheizt und anschließend mit einem Träger verpresst. Hierbei soll eine sogenannte "Class A finish"-Oberfläche erzeugt werden. Diese Oberfläche zeichnet sich durch besondere Glätte und Güte aus. Die Herstellung von strukturierten Oberflächen wird nicht angesprochen.

Aus der DE 44 00 388 C2 ist ein Verfahren und eine Vorrichtung zum Herstellen eines Formteils aus mindestens einer Trägerschicht und Kaschierschicht bekannt. Das Verfahren zum Herstellen dieses Formteils, insbesondere eines Verkleidungsteils für ein Kraftfahrzeug, aus mindestens einer Trägerschicht und einer Kaschierschicht, beim dem die flachen Schichten in paralleler Erstreckung aufeinander ausgerichtet und ihre Ränder im Abstand von einander gehalten werden, während der Rand der Trägerschicht unter Bildung eines bearbeiteten Randes abgetrennt wird, und die Schichten unter gegenseitiger Verbindung zwischen zwei Pressformflächen zusammengepresst werden, worauf der gegenüber dem bearbeiteten Rand der Trägerschicht nach außen vorstehende Rand der Kaschierschicht um den bearbeiteten Rand der Trägerschicht umgelegt und rückseitig an die Trägerschicht angelegt und an dieser befestigt wird, ist dadurch gekennzeichnet, dass unmittelbar nach dem Abtrennen des Randes der Trägerschicht und dem Zusammenpressen der beiden Schichten der vorstehende Rand der Kaschierschicht um den bearbeiteten Rand umgelegt und an die Rückseite der Trägerschicht angedrückt wird, während das Formteil mit seiner Vorderseite noch an der zugeordneten Pressformfläche anliegt.

Das vorgenannte Verfahren ist sehr aufwendig und beinhaltet eine hohe Verschnittmenge des Materials der Trägerschicht.

Die Verwendung von naturfaser-verstärktem Polymer als Trägerwerkstoff ist beispielsweise in der DE 196 07 781 A1 beschrieben.

Demgegenüber in der DE 44 47 645 C2 wird ein Verfahren zum Herstellen eines Formteils, insbesondere eine Innenverkleidung oder dergleichen für Kraftfahrzeuge beschrieben. Das Formteil wird hergestellt aus einer mit einem thermoplastischen Harz vorimprägnierten Vliesmatte, bei dem die Vliesmatte über die Erweichungstemperatur des thermoplastischen Harzes hinaus in einer Kontaktheizpresse flächig erwärmt und vorverdichtet und auf diese Vilesmatte unter hohem Druck und einer Temperatur von beispielsweise 100 bis 130 °C in einer Heißdruckform verpresst wird und das verpresste Formteil in mindestens einer Kühlstufe gekühlt wird. In dieser mindestens einen Kühlstufe wird ein Kontaktdruck zwischen der Kühlform und dem geformten Formteil aufrechterhalten. Anschließend wird auf das verpresste Formteil eine Folie oder sonstiges Dekormaterial aufkaschiert, in dem die Folie oder sonstiges Dekormaterial sowie die zu kaschierende Oberfläche des Formteils durch Kontaktwärme erhitzt und unter geringem Druck aneinandergelegt werden, worauf das mit der Kaschierfolle und sonstigem Dekormaterial versehene verpresste Formteil abgekühlt wird.

Auch das vorgenannte Verfahren, dass sich im Stand der Technik durchgesetzt hat, ist in Bezug auf die Verfahrensökonomie noch nicht optimal.

Dementsprechend bestand die Aufgabe der vorliegenden Erfindung in der Bereitstellung eines verbesserten Verfahrens zur Herstellung von Innenausstattungskomponenten von Kraftfahrzeugen mit einem definierten Oberflächenprofil.

Die vorgenannte Aufgabe der vorliegenden Erfindung wird gelöst einer ersten Ausführungsform durch ein Verfahren zur Herstellung von Innenausstattungskomponenten von Kraftfahrzeugen mit einem definierten Oberflächenprofil, wobei man in einem ersten Schritt einen die sichtbare Oberfläche bildende Werkstoff 1 in einer Werkzeugkavität positioniert und durch Einwirkung von Druck und/oder Temperatur verformt und gleichzeitig die gewünschte Oberflächenprägung erzeugt, in einem weiteren Schritt einen Trägerwerkstoff 2 auf der Basis von naturfaserverstärkten Polymerwerkstoffen in die Werkzeugkavität einbringt und anschießend verformt, wobei Randbereiche des Werkstoffs 1 nicht mit dem Trägerwerkstoff 2 bedeckt sind und anschließend nach Umbugen der Randbereiche des Werkstoffs 1 die Innenaustattungskomponente aus der Werkzeugkavität entformt.

Die Vorteile des erfindungsgemäßen Verfahrens bestehen insbesondere darin, dass die Prägung des Oberflächenprofils, beispielsweise die Narbung im Umformprozess aufgebracht wird. Dadurch ist eine Prägung/Narbung beim Folienhersteller nicht erforderlich. Die Prägung/Narbung wird somit erst im Werkzeug hergestellt, so dass kein oder nur ein geringer Auszug der Narbe auftritt. Ein weiterer Vorteil der vorliegenden Erfindung besteht in der Kombination der Herstellung naturfaserverstärkter Bauteile, wie sie beispielsweise in der genannten DE 44 47 645 beschrieben sind, Integrierung des Prozessschrittes der Dekoraufbringung und Narbung.

Umformen des Trägerwerkstoffs und Kaschieren mit Folie werden erfindungsgemäß somit in einem Prozessschritt durchgeführt, so dass der üblicherweise erforderliche zweite Aufheizschritt oder das Aufbringen eines zusätzlichen Verbindungswerkstoffes, beispielsweise eines Klebers entfällt. Somit können die Herstellungskosten der Innenausstattungskomponenten durch die Integration der Prozessschritte deutlich reduziert werden. Weitere Vorteile der erfindungsgemäßen Vorgehensweise bestehen in der Darstellbarkeit kleiner Radien und einem geringen Narbauszug.

Mit Hilfe der vorliegenden Erfindung ist darüber hinaus eine manuelle Narbung darstellbar, beispielsweise ausgehend von einem Belederungsmodell. Auch ein Softtouch ist in Radienbereichen darstellbar. Prozesstechnisch sind hervorzuheben, dass Schaumbruch und Faltenproblematik weitgehend eliminiert sind.

Der allgemeine Ablauf des Verfahrens kann dahingehend beschrieben werden, dass ein geeigneter Werkstoff, insbesondere eine Folie, beispielsweise eine Metall-, Leder-, Schaum- oder Kompaktfolie, beispielsweise aus einem Polymerwerkstoff nach thermischer Behandlung, wobei der Werkstoff jede beliebige Temperatur annehmen kann, auch Raumtemperatur, über ein speziell gestaltetes Werkzeug positioniert und durch das Anlegen geeigneter Druck- und/oder Temperaturverhältnisse an mehreren oder einer Seite des Werkstoffs in die Werkzeugkavität verformt wird. Während dieses Verformungsprozesses oder nach dem Verformungsprozess wird durch Anlegen geeigneter Druck- und/oder Temperaturverhältnisse eine Prägung des Werkstoffs 1 vorgenommen, die beispielsweise eine Narbung auf der Sichtseite des Werkstoffs 1 wiedergeben kann. Während oder nach dem Umformprozess des Werkstoffs 1 wird der Trägerwerkstoff 2 in die Werkstoffkavität eingebracht und verformt, in dem sich bereits der verformte Werkstoff 1 befindet. Das Werkzeug wird dabei so gestaltet, dass im Randbereich, wo erforderlich, der Werkstoff 1 von dem Trägerwerkstoff 2 getrennt bleibt. Dies wird erfindungsgemäß dadurch erreicht, dass die entsprechenden Randbereiche des Werkstoffs 1 nicht mit dem Trägerwerkstoff 2 bedeckt sind. Nach dem vorzunehmenden Umbug des Werkstoffs 1 in diesem Bereich wird das so entstandene Bauteil entformt und eventuell erforderlichen Nachfolgeprozessen zugeführt.

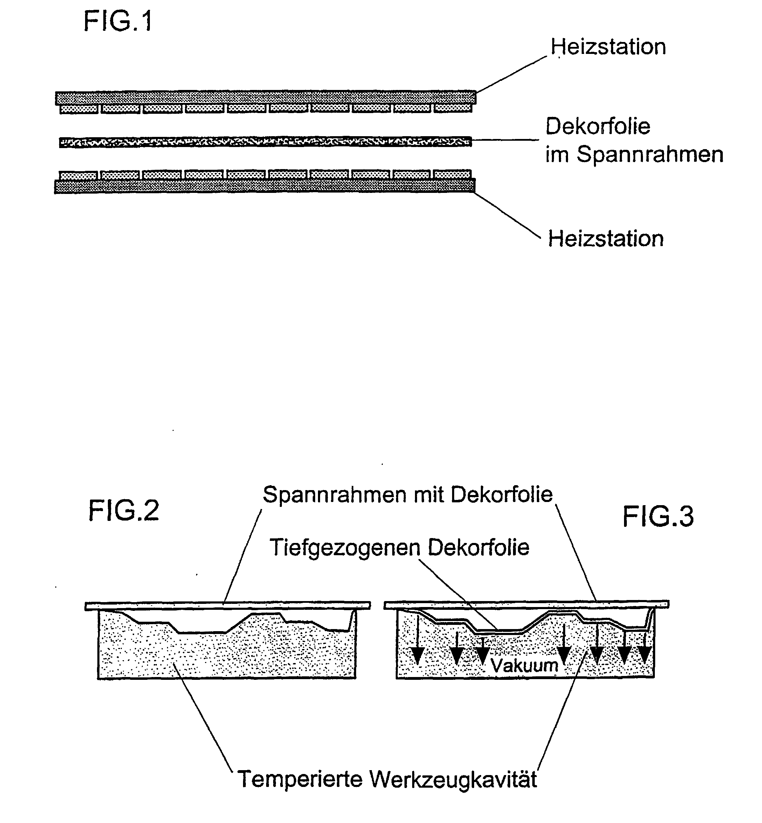

In der Fig. 1 wird das kontaktlose Aufheizen einer Dekorfolie in einer Heizstation beschrieben. Eine Dekorfolie (Schaum- oder Kompaktfolie) auf Polyolefinbasis wird mit einem Spannrahmen einer Heizstation zugeführt (Infrarot- oder Keramikstrahler mit einzeln regelbaren Heizfeldern) und auf 70 bis 90 °C je nach Folienqualität erhitzt. Vor dem Aufheizen wird die Folie mit Spannrahmen (der Spannrahmen ist so ausgelegt, dass während der Verformung ein gezieltes und lokal einstellbares Nachrutschen der Folie gewährleistet ist) über eine Werkzeugkavität positioniert, wie dies in Fig. 2 beschrieben ist. Diese Werkzeugkavität ist vorzugsweise temperiert und so gestaltet (Porosität), dass Vakuum angelegt werden kann. Das Anlegen von Vakuum ist erforderlich für das Tiefziehen der Folie in die Kavität. Als Schaumfolie eignet sich beispielsweise eine 0,5 mm TPO-Folie, die flammkaschiert ist mit 2,5 mm TPO-Schaumfolie mit einem Raumgewicht von 40 bis 70 kg/m³.

In der Fig. 3 wird die tiefgezogene Dekorfolie in der gegebenenfalls geheizten Werkzeugkavität dargestellt.

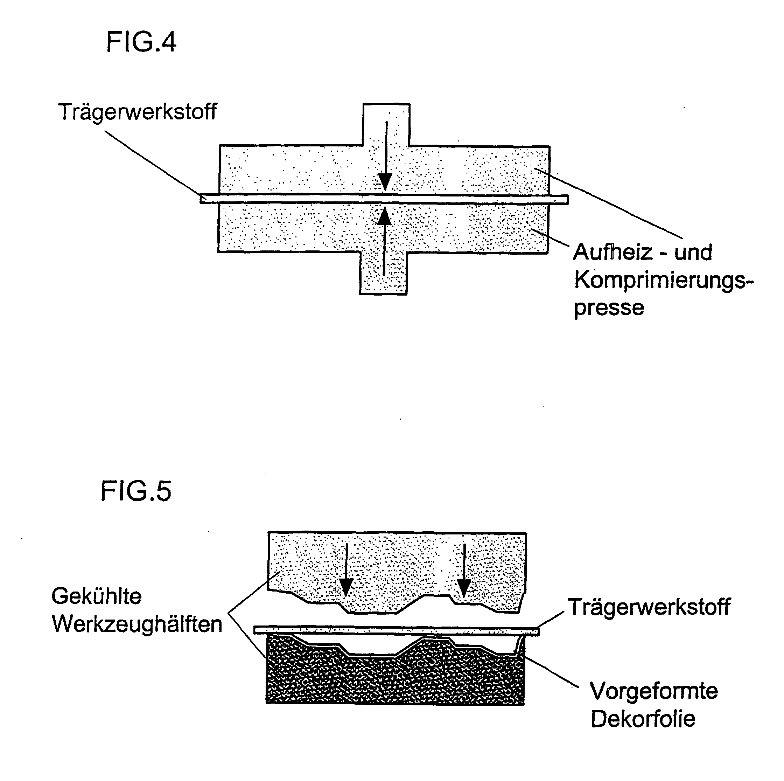

In der Fig 4 wird das Aufheizen des Trägerwerkstoffs 2 auf Basis nachwachsender Rohstoffe beschrieben. Der Trägerwerkstoff (typischerweise Flachsfasern und PP-Fasern in einem Mischungsverhältnis von 50 : 50 Gew.-%, gemischt und zu einem vernadelten Vlies verarbeitet, Vliesstärke 20 bis 30 mm, typische Flächengewichte 1600 bis 2200 g/m²) wird als Nadelvlies-Halbzeug in einer ein- oder mehrstufigen Heizung (typischerweise eine Presse mit eingebauter Kontaktheizplatte) aufgeheizt und gleichzeitig komprimiert (auf eine Wandstärke von 2 bis 4 mm).

Während der Komprimierung findet die Imprägnierung der Flachsfasern mit den aufgeschmolzenen PP-Fasern statt.

Anschließend wird die aufgeheizte Matte über dem Werkzeug positioniert, wie dies in Fig. 5 dargestellt wird. Die aufgeheizte Matte des Trägerwerkstoffs 2 befindet sich über der Werkzeugkavität, in der sich der Folienvorformling mit geprägter Oberfläche der Sichtseite befindet. Durch Schließen der beiden nun gekühlten Werkzeughälften in der Formpresse wird der aufgeheizte Trägerwerkstoff 2 umgeformt und gleichzeitig konsolidiert. Die Verbindung zwischen Folie und Trägerwerkstoff 2 geschieht durch Verschweißen beim Umformen aufgrund der in der Matte und dem Werkstoff 1 befindlichen Restwärme. Während des Umformens ist durch entsprechende Werkzeugauslegung zu verhindern, dass in den Bereichen, die für einen Umbug des Werkstoffs 1 vorgesehen sind, eine Verschweißung von Werkstoff 1 und Trägerwerkstoff 2 stattfinden kann. Diese Maßgabe ist erforderlich um die Folie, d. h. den Werkstoff 1 später umbugen zu können.

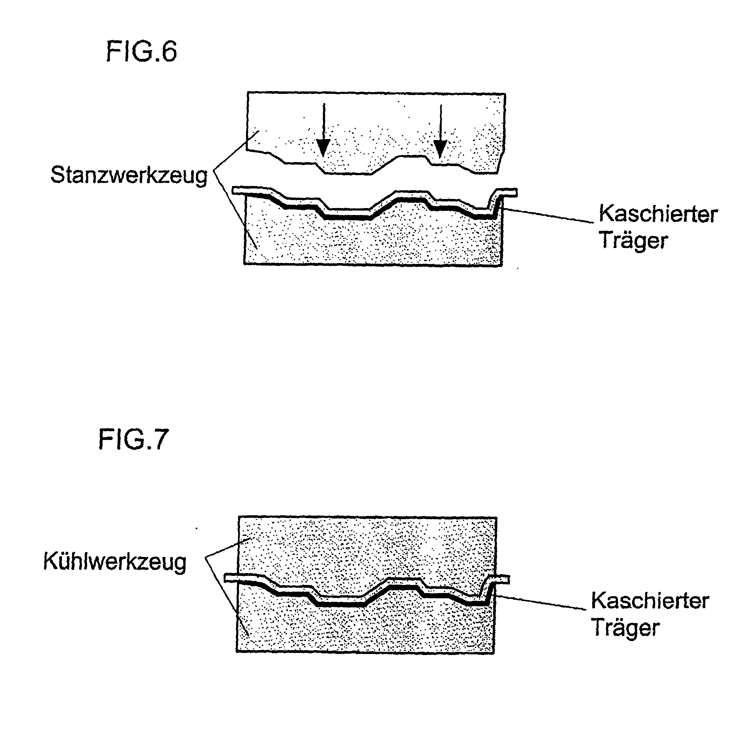

Das Formteil erhält im Umformprozess entsprechend der Anforderung den Randbeschnitt der Trägerkontur, wie dies in Fig. 6 dargestellt wird.

Alternativ ist es möglich, durch entsprechende Werkzeugauslegung den Umbug während des Umformens anzuformen. Nach vollständiger Konsolidierung des Trägerwerkstoffs 2 ist der Abkühlprozess abgeschlossen und die Folie 1 mit dem Trägerwerkstoff 2 fest verbunden. Die Abkühlzeit beträgt beispielsweise 30 bis 40 sec. Anschließend ist es möglich, die beiden Werkzeughälften zu öffnen und das hergestellte Formteil auf geeignete Weise zu entnehmen.

## Patentansprüche

1. Verfahren zur Herstellung von Innenausstattungskomponenten von Kraftfahrzeugen mit einem definierten Oberflächenprofil, wobei man in einem ersten Schritt einen, die sichtbare Oberfläche bildende Werkstoff (1) in einer Werkzeugkavität posittoniert und durch Einwirkung von Druck und/oder Wärme verformt und gleichzeitig die gewünschte Oberflächenprägung erzeugt, in einem weiteren Schritt einen Trägerwerkstoff (2) auf der Basis von naturfaserverstärkten Polymerwerkstoffen in die Werkzeugkavität einbringt und anschließend verformt, wobei Randbereiche des Werkstoffs (1) nicht mit dem Trägerwerkstoff (2) bedeckt sind und anschließend nach Umbugen der Randbereiche des Werkstoffs (1) die Innenaustattungskomponente aus der Werkzeugkavität entformt.

2. Verfahren nach Anspruch 1, **dadurch gekennzeichnet, dass** man als Werkstoff (1) eine Folie, insbesondere eine Metall-, Leder-, Schaum- oder Kompaktfolie, beispielsweise aus einem Polymerwerkstoff einsetzt.

3. Verfahren nach Anspruch 1, **dadurch gekennzeichnet, dass** man die Oberflächenprägung, Insbesondere Narbung durch Einwirkung von Druck herstellt.

4. Verfahren nach Anspruch 1, **dadurch gekennzeichnet, dass** man die Verformung des Werkstoffs (1) durch Einwirkung von Temperatur vornimmt und eine lederähnliche Oberflächennarbung prägt.

5. Innenausstattungskomponente von Kraftfahrzeugen mit einem definierten Oberflächenprofil umfassend einen Trägerwerkstoff (2) auf der Basis von naturfaserverstärkten Polymerwerkstoffen und einen, die sichtbare Oberfläche bildende Werkstoff (1), wobei der Werkstoff (1) Randbereiche der Rückseite des Trägerwerkstoffs (2) bedeckt, erhältlich nach einem Verfahren gemäß einem der Ansprüche 1 bis 4.

## Claims

1. A method for the preparation of interior trim components of motor vehicles having a defined surface profile, wherein in a first step a material (1) constituting the visible surface is positioned in a mold cavity and molded by the action of pressure and/or heat while the desired surface impression is simultaneously produced, in a further step a support material (2) based on natural-fiber reinforced polymer materials is inserted in the mold cavity followed by molding, edge portions of material (1) not being covered by support material (2), followed by demolding the interior trim component from the mold cavity upon bending the edge portions of material (1).

2. The method according to claim 1, **characterized in that** a sheet or foil, especially a metal foil, leather, foam or compact sheet, e.g., made of a polymer material, is employed as said material (1).

3. The method according to claim 1, **characterized in that** said surface impression, especially graining, is effected by the action of pressure.

4. The method according to claim 1, **characterized in that** said molding of material (1) is effected by the action of temperature and said impression is a leather-like surface graining.

5. Interior trim components of motor vehicles having a defined surface profile, comprising a support material (2) based on natural-fiber reinforced polymer materials and a material (1) constituting the visible surface, wherein said material (1) covers edge portions of the back side of support material (2), obtainable by a method according to any of claims 1 to 4.

## Revendications

1. Procédé de fabrication de composants d'installation intérieure de véhicules moteurs avec un profil de surface défini, dans lequel une première étape consiste en ce qu'on place un matériau (1) constituant la surface visible dans une cavité de moule et qu'on le déforme par l'action de pression et/ou de chaleur, l'empreinte de surface désirée étant produite en même temps, une autre étape consiste en ce qu'on introduit un matériau support (2) à la base de matériaux polymères renforcés avec des fibres naturels dans la cavité de moule et qu'on le déforme ensuite, dans lequel des régions marginales dudit matériau (1) ne sont pas couvertes dudit matériau support (2), et qu'on démoule ensuite le composant d'installation intérieure de la cavité de moule après avoir plié lesdites régions marginales du matériau (1).

2. Procédé selon la revendication 1, **caractérisé en ce qu'**une feuille, notamment une feuille de métal, de cuir, cellulaire ou compacte, par exemple, d'un matériau polymère, est employée en tant que matériau (1).

3. Procédé selon la revendication 1, **caractérisé en ce que** ladite empreinte de surface, notamment grainage, est produite par l'action de pression.

4. Procédé selon la revendication 1, **caractérisé en ce que** ladite déformation du matériau (1) est effectuée par l'action de température et qu'un grainage de surface ressemblant à celui de cuir est empreint.

5. Composant d'installation intérieure de véhicules moteurs avec un profil de surface défini, comprenant un matériau support (2) à la base de matériaux polymères renforcés avec des fibres naturels et un matériau (1) constituant la surface visible, dans lequel ledit matériau (1) couvre régions marginales du côté postérieur dudit matériau support (2), capable d'être obtenu par un procédé selon l'une quelconque des revendications 1 à 4.
